# FASCICULE DE BREVET EUROPEEN

(11) **EP 3 606 776 B1**
(45) Date de publication et mention de la délivrance du brevet: **23.02.2022**
(21) Numéro de dépôt: 18722672.5
(22) Date de dépôt: 30.03.2018
(51) Int. Cl.: B60H 1/00, B60H 1/32

(54) **CIRCUIT DE CLIMATISATION INVERSIBLE INDIRECT DE VÉHICULE AUTOMOBILE ET PROCÉDÉ DE GESTION EN MODE DÉGIVRAGE**
INDIREKTER REVERSIBLER KLIMAKREISLAUF FÜR EIN KRAFTFAHRZEUG UND VERFAHREN ZUM BETRIEB IM ABTAUMODUS
INDIRECT REVERSIBLE AIR-CONDITIONING CIRCUIT FOR A MOTOR VEHICLE, AND METHOD FOR OPERATION IN DEFROSTING MODE

(30) Priorité: 05.04.2017 FR 1752949
(43) Date de publication de la demande: 12.02.2020
(73) Titulaire: Valeo Systemes Thermiques, 78322 Le Mesnil Saint-Denis Cedex (FR)
(72) Inventeur: BEAUVIS, Régis, 78322 Le Mesnil Saint-Denis Cedex (FR); BENOUALI, Jugurtha, 78322 Le Mesnil Saint-Denis Cedex (FR); DELAFORGE, Laurent, 78322 Le Mesnil Saint-Denis Cedex (FR)
(74) Mandataire: Valeo Systèmes Thermiques
(86) Numéro de dépôt international: PCT/FR2018/050811
(87) Numéro de publication internationale: WO 2018/185415

(56) Documents cités:
- EP-A1- 2 933 586
- DE-T5-112012 005 123
- US-A- 5 605 051

## Description

L'invention se rapporte au domaine des véhicules automobiles et plus particulièrement à un procédé de fonctionnement d'un circuit de climatisation inversible indirect pour véhicule automobile.

Les véhicules automobiles actuels comportent de plus en plus souvent un circuit de climatisation. Généralement, dans un circuit de climatisation « classique », un fluide réfrigérant passe successivement dans un compresseur, un premier échangeur de chaleur, appelé condenseur, placé en contact avec un flux d'air extérieur au véhicule automobile pour libérer de la chaleur, un dispositif de détente et un deuxième échangeur de chaleur, appelé évaporateur, placé en contact avec un flux d'air intérieur du véhicule automobile pour le refroidir.

Il existe également des architectures de circuit de climatisation plus complexes qui permettent d'obtenir un circuit de climatisation inversible, c'est-à-dire qu'il peut utiliser un mode de fonctionnement pompe à chaleur dans lequel il est apte à absorber de l'énergie calorifique dans l'air extérieur au niveau du premier échangeur de chaleur, appelé alors évapo-condenseur, et la restituer dans l'habitacle notamment au moyen d'un troisième échangeur de chaleur dédié.

Cela est possible notamment en utilisant un circuit de climatisation indirect. On entend par indirect ici que le circuit de climatisation comporte deux boucles de circulation de deux fluides distincts (comme par exemple un fluide réfrigérant et de l'eau glycolée) afin d'effectuer les différents échanges de chaleur.

Le circuit de climatisation comprend ainsi une première boucle de fluide réfrigérant dans laquelle circule un fluide réfrigérant, une deuxième boucle de fluide caloporteur dans laquelle circule un fluide caloporteur, et un échangeur de chaleur bifluide agencé conjointement sur la première boucle de fluide réfrigérant et sur la deuxième boucle de fluide caloporteur, de façon à permettre les échanges de chaleur entre lesdites boucles

Un tel circuit de climatisation inversible indirect est par exemple connu du document EP 2 933 586 A1.

Lors de l'utilisation de tels circuits de climatisation inversibles dans un mode pompe à chaleur, du givre peut se former au niveau de l'évaporateur disposé en face avant du véhicule automobile. Ce givre diminue les échanges de chaleur entre le flux d'air extérieur traversant ledit évaporateur et le fluide réfrigérant ce qui diminue fortement les performances du circuit de climatisation inversible en mode pompe à chaleur.

Une solution connue pour enlever le givre s'étant formé au niveau de l'évaporateur de face avant est de repasser le circuit de climatisation inversible en mode climatisation afin que du fluide réfrigérant chaud traverse ledit évaporateur de face avant ou alors afin de réchauffer le flux d'air extérieur dans le cas d'un circuit de climatisation indirect. Cependant, cette solution n'est pas satisfaisante, car le passage en mode climatisation entraîne que de l'air froid sera envoyé dans l'habitacle et donc diminuera le confort des occupants.

Un des buts de la présente invention est donc de remédier au moins partiellement aux inconvénients de l'art antérieur et de proposer un procédé de gestion en mode de dégivrage amélioré.

La présente invention concerne donc un procédé de fonctionnement d'un circuit de climatisation inversible indirect pour véhicule automobile, ledit procédé comprenant les caractéristiques de la revendication 1, ledit circuit de climatisation inversible indirect comportant :
- une première boucle de fluide réfrigérant dans laquelle circule un fluide réfrigérant, ladite première boucle de fluide réfrigérant comportant dans le sens de circulation du fluide réfrigérant :
   ∘ un compresseur,
   ∘ un échangeur de chaleur bifluide
   ∘ un premier dispositif de détente,
   ∘ un premier échangeur de chaleur étant destiné à être traversé par un flux d'air intérieur au véhicule automobile,
   ∘ un deuxième dispositif de détente,
   ∘ un deuxième échangeur de chaleur étant destiné à être traversé par un flux d'air extérieur au véhicule automobile, et
   ∘ une conduite de contournement du deuxième échangeur de chaleur,
- une deuxième boucle de fluide caloporteur dans laquelle circule un fluide caloporteur, ladite deuxième conduite de circulation de fluide caloporteur comportant un quatrième échangeur de chaleur destiné à être traversé par le flux d'air extérieur, ledit quatrième échangeur de chaleur étant disposé en amont du deuxième échangeur de chaleur dans le sens de circulation du flux d'air extérieur,
- l'échangeur de chaleur bifluide étant agencé conjointement sur la première boucle de fluide réfrigérant en aval du compresseur, entre ledit compresseur et le premier dispositif de détente, et sur la deuxième boucle de fluide caloporteur, de façon à permettre les échanges de chaleur entre la première boucle de fluide réfrigérant et la deuxième boucle de fluide caloporteur,
le circuit de climatisation inversible indirect comportant en outre :
- un capteur de pression du fluide réfrigérant à basse pression, ledit capteur de pression étant disposé en aval de la conduite de contournement, entre ladite conduite de contournement et le compresseur,
- une unité centrale de contrôle connectée audit capteur de pression du fluide réfrigérant à basse pression et audit compresseur, ladite unité centrale de contrôle étant également connectée au premier et au deuxième dispositif de détente de sorte qu'ils puissent être traversés par le fluide réfrigérant sans perte de pression ou contournés.

Selon un aspect de l'invention, le circuit inversible indirect comporte un capteur de pression du fluide réfrigérant à haute pression, ledit capteur étant disposé en aval de l'échangeur de chaleur bifluide, entre ledit échangeur de chaleur bifluide et la vanne électronique d'expansion, l'unité centrale de contrôle étant connectée audit capteur de température du fluide réfrigérant à haute pression.

Selon un autre aspect de l'invention, le circuit inversible indirect comporte un capteur de pression du fluide réfrigérant à pression intermédiaire, ledit capteur de pression étant disposé en aval de la vanne électronique d'expansion, entre ladite vanne électronique d'expansion et le deuxième dispositif de détente, l' unité centrale de contrôle étant connectée audit capteur de pression du fluide réfrigérant à pression intermédiaire.

Selon un autre aspect de l'invention, le circuit de climatisation inversible indirect comporte au niveau de la face avant du véhicule automobile, un dispositif d'obturation de face avant mobile entre une position d'obturation et une position ouverte, l' unité centrale de contrôle étant connectée audit dispositif d'obturation de face avant.

Selon un autre aspect de l'invention, le circuit de climatisation inversible indirect comporte un ventilateur de face avant disposé en face avant du véhicule automobile afin de produire le flux d'air extérieur l' unité centrale de contrôle étant connectée audit ventilateur de face avant.

Le procédé de fonctionnement d'un circuit de climatisation inversible indirect selon l'invention comporte un mode de dégivrage dans lequel, lorsque du givre est détecté au niveau du deuxième échangeur de chaleur :
▪ la deuxième boucle de fluide caloporteur est mise à l'arrêt,
▪ le flux d'air intérieur et le flux d'air extérieur sont stoppés,
▪ le fluide réfrigérant de la première boucle de fluide réfrigérant passe successivement dans le compresseur où ledit fluide réfrigérant est comprimé, l'échangeur de chaleur bifluide, le premier dispositif de détente que ledit fluide réfrigérant traverse sans perte de pression, le premier échangeur de chaleur, le deuxième dispositif de détente que ledit fluide réfrigérant traverse sans perte de pression et le deuxième échangeur de chaleur avant de retourner au compresseur,
lorsque la pression du fluide réfrigérant mesurée par le capteur de pression du fluide réfrigérant à basse pression est telle que ledit fluide réfrigérant soit à l'état diphasique avec une température de saturation supérieure à 0°C :
▪ la deuxième boucle de fluide caloporteur est remise en route de sorte que le fluide caloporteur circule dans l'échangeur bifluide et le quatrième échangeur de chaleur,
▪ le compresseur est arrêté,
▪ un flux d'air extérieur est généré.

Selon un aspect du procédé selon l'invention, le circuit de climatisation inversible indirect comporte un capteur de pression du fluide réfrigérant à haute pression et que la remise en route de la deuxième boucle de fluide caloporteur, l'arrêt du compresseur et la génération du flux d'air extérieur sont réalisés également si la pression du fluide réfrigérant mesurée au niveau du capteur de pression du fluide réfrigérant à haute pression est supérieure ou égale à 20 bars.

Selon un autre aspect du procédé selon l'invention, le circuit de climatisation inversible indirect comporte un capteur de pression du fluide réfrigérant à pression intermédiaire et que la remise en route de la deuxième boucle de fluide caloporteur, l'arrêt du compresseur et la génération du flux d'air extérieur sont réalisés également si la pression du fluide réfrigérant mesurée au niveau du capteur de pression du fluide réfrigérant à pression intermédiaire est supérieure ou égale à 10 bars.

Selon un autre aspect du procédé selon l'invention, le circuit de climatisation inversible indirect comporte un dispositif d'obturation de face avant et que afin de générer du flux d'air extérieur, ledit dispositif d'obturation de face avant est en position ouverte.

Selon un autre aspect du procédé selon l'invention, le circuit de climatisation inversible indirect comporte un ventilateur de face avant et que lors de la génération du flux d'air extérieur, ledit ventilateur de face avant est mis en route à vitesse maximale pendant une durée comprise entre 10 et 60s.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre une représentation schématique d'un circuit de climatisation inversible indirect selon un premier mode de réalisation,
- la figure 2 montre une représentation schématique d'un circuit de climatisation inversible indirect selon un deuxième mode de réalisation,
- la figure 3 montre une représentation schématique d'un circuit de climatisation inversible indirect selon un troisième mode de réalisation,
- les figures 4a et 4b montrent des représentations schématiques de dispositifs de détente selon différents modes de réalisation,
- la figure 5 montre une représentation schématique de la deuxième boucle de fluide caloporteur du circuit de climatisation inversible indirect des figures 1 à 3, selon un mode de réalisation alternatif,
- la figure 6a montre le circuit de climatisation inversible indirect de la figure 1 selon un mode de refroidissement,
- la figure 6b montre un diagramme pression / enthalpie du mode de refroidissement illustré à la figure 6a,
- la figure 7a montre le circuit de climatisation inversible indirect de la figure 1 selon un mode pompe à chaleur,
- la figure 7b montre un diagramme pression / enthalpie du mode pompe à chaleur illustré à la figure 9a,
- les figures 8a et 8b montrent le circuit de climatisation inversible indirect de la figure 1 selon les deux temps d'un mode de dégivrage,
- la figure 9 montre un logigramme d'un exemple de procédé de fonctionnement du circuit de climatisation inversible indirecte selon un mode de dégivrage.

Sur les différentes figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées et/ou interchangées pour fournir d'autres réalisations.

Dans la présente description, on peut indexer certains éléments ou paramètres, comme par exemple premier élément ou deuxième élément ainsi que premier paramètre et second paramètre ou encore premier critère et deuxième critère, etc. Dans ce cas, il s'agit d'un simple indexage pour différencier et dénommer des éléments ou paramètres ou critères proches, mais non identiques. Cette indexation n'implique pas une priorité d'un élément, paramètre ou critère par rapport à un autre et on peut aisément interchanger de telles dénominations sans sortir du cadre de la présente description. Cette indexation n'implique pas non plus un ordre dans le temps par exemple pour apprécier tel ou tel critère.

Dans la présente description, on entend par « placé en amont » qu'un élément est placé avant un autre par rapport au sens de circulation d'un fluide. A contrario, on entend par « placé en aval » qu'un élément est placé après un autre par rapport au sens de circulation du fluide.

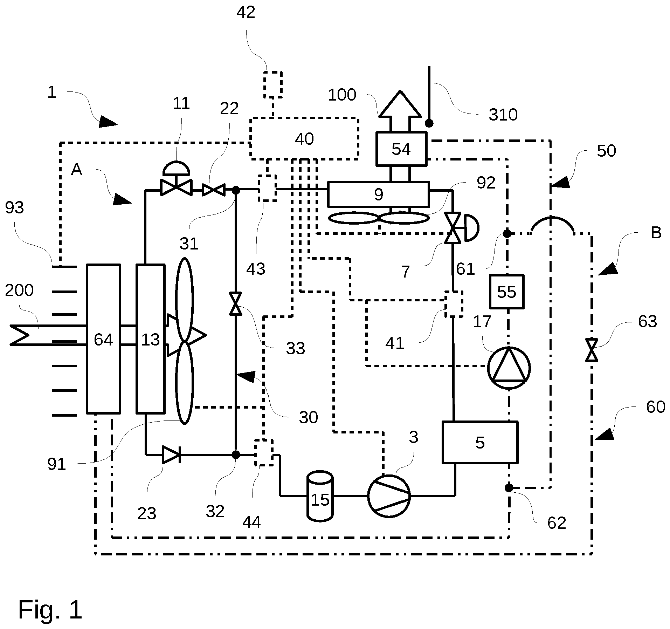

La figure 1 montre un circuit de climatisation indirect 1 pour véhicule automobile. Ce circuit de climatisation indirect 1 comporte notamment :
- une première boucle de fluide réfrigérant A dans laquelle circule un fluide réfrigérant,
- une deuxième boucle de fluide caloporteur B dans laquelle circule un fluide caloporteur, et
- un échangeur de chaleur bifluide 5 agencé conjointement sur la première boucle de fluide réfrigérant A et sur la deuxième boucle de fluide caloporteur B, de façon à permettre les échanges de chaleur entre ladite première boucle de fluide réfrigérant A et ladite deuxième boucle de fluide caloporteur B.

La première boucle de fluide réfrigérant A, représentée en trait plein sur les différentes figures, comporte plus particulièrement dans le sens de circulation du fluide réfrigérant :
∘ un compresseur 3,
∘ l'échangeur de chaleur bifluide 5, disposé en aval dudit compresseur 3,
∘ un premier dispositif de détente 7, par exemple une vanne électronique d'expansion,
∘ un premier échangeur de chaleur 9 étant destiné à être traversé par un flux d'air intérieur 100 au véhicule automobile,
∘ un deuxième dispositif de détente 11, par exemple un orifice tube,
∘ un deuxième échangeur de chaleur 13 étant destiné à être traversé par un flux d'air extérieur 200 au véhicule automobile, et
∘ une conduite de contournement 30 du deuxième échangeur de chaleur 13.

La conduite de contournement 30 peut relier plus spécifiquement un premier point de raccordement 31 et un deuxième point de raccordement 32.

Le premier point de raccordement 31 est de préférence disposé, dans le sens de circulation du fluide réfrigérant, en aval du premier échangeur de chaleur 9, entre ledit premier échangeur de chaleur 9 et le deuxième échangeur de chaleur 13. Plus particulièrement, et comme illustré sur la figure 1, le premier point de raccordement 31 est disposé entre le premier échangeur de chaleur 9 et le deuxième dispositif de détente 11. Il est cependant tout à fait possible d'imaginer que le premier point de raccordement 31 soit disposé entre le deuxième dispositif de détente 11 et le deuxième échangeur de chaleur 13 du moment que le fluide réfrigérant a la possibilité de contourner ledit deuxième dispositif de détente 11 ou de le traverser sans subir de perte de pression.

Le deuxième point de raccordement 32 est quant à lui de préférence disposé en aval du deuxième échangeur de chaleur 13, entre ledit échangeur de chaleur 13 et le compresseur 3.

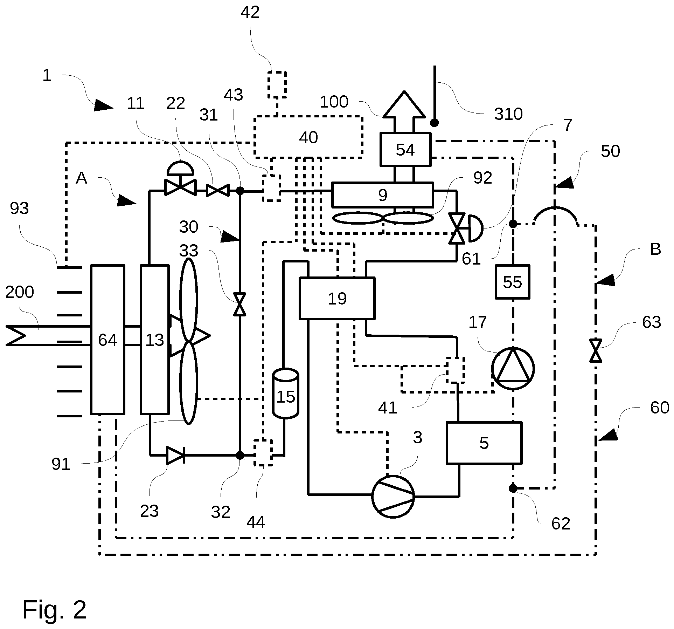

Comme illustré sur la figure 2, la première boucle de fluide réfrigérant A peut également comporter un premier échangeur de chaleur interne 19 (IHX pour « internai heat exchanger ») permettant un échange de chaleur entre le fluide réfrigérant en sortie de l'échangeur de chaleur bifluide 5 et le fluide réfrigérant en sortie du deuxième échangeur de chaleur 13 ou de la conduite de contournement 30. Ce premier échangeur de chaleur interne 19 comporte notamment une entrée et une sortie de fluide réfrigérant en provenance du deuxième point de raccordement 32, ainsi qu'une entrée et une sortie de fluide réfrigérant en provenance de l'échangeur de chaleur bifluide 5.

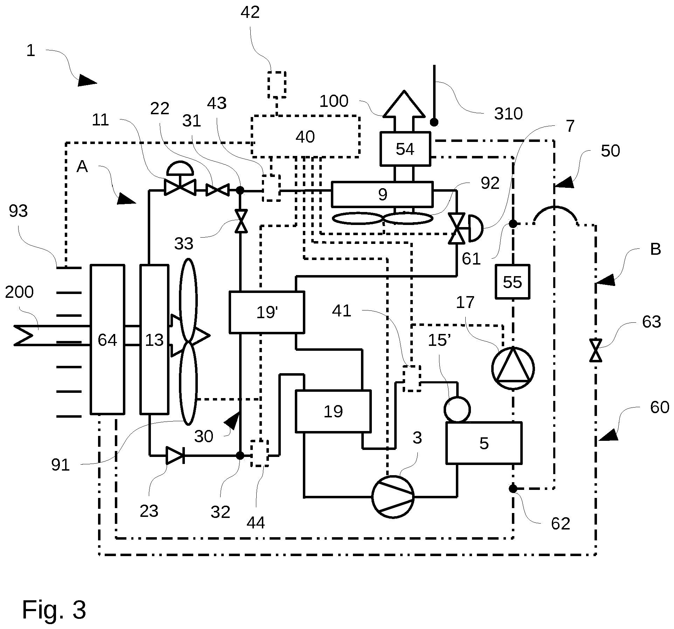

Comme illustré à la figure 3, la première boucle de fluide réfrigérant A peut comporter, en supplément du premier échangeur de chaleur interne 19, un deuxième échangeur de chaleur interne 19' permettant un échange de chaleur entre le fluide réfrigérant à haute pression en sortie du premier échangeur de chaleur interne 19 et le fluide réfrigérant à basse pression circulant dans la conduite de contournement 30, c'est à dire en provenance du premier point de raccordement 31. Par fluide réfrigérant à haute pression, on entend par là un fluide réfrigérant ayant subi une augmentation de pression au niveau du compresseur 3 et qu'il n'a pas encore subi de perte de pression du fait du premier dispositif de détente 7 ou du deuxième dispositif de détente 11. Ce deuxième échangeur de chaleur interne 19' comporte notamment une entrée et une sortie de fluide réfrigérant en provenance du premier point de raccordement 31, ainsi qu'une entrée et une sortie de fluide réfrigérant à haute pression en provenance du premier échangeur de chaleur interne 19.

Au moins un des premier 19 ou deuxième 19' échangeurs de chaleur interne peut être un échangeur de chaleur coaxial, c'est à dire comportant deux tubes coaxiaux et entre lesquels s'effectuent les échanges de chaleur.

De préférence, le premier échangeur de chaleur interne 19 peut être un échangeur de chaleur interne coaxial d'une longueur comprise entre 50 et 120mm alors que le deuxième échangeur de chaleur interne 19' peut être un échangeur de chaleur interne coaxial d'une longueur comprise entre 200 et 700mm.

Comme le montrent les figures 1 et 2, la première boucle de fluide réfrigérant peut également comporter un accumulateur 15 disposé en amont du compresseur 3, plus précisément entre le deuxième point de raccordement 32 et ledit compresseur 3. Dans le cas où un premier échangeur de chaleur interne 19 est présent, ledit accumulateur 15 est disposé en amont dudit premier échangeur de chaleur interne 19, entre le deuxième point de raccordement 32 et ledit premier échangeur de chaleur interne 19. Cet accumulateur 15 permet notamment de réaliser une séparation de phase du fluide réfrigérant de sorte que le fluide réfrigérant arrivant au compresseur 3 ou dans le premier échangeur de chaleur interne 19 soit en phase gazeuse.

Selon une variante illustrée à la figure 3, la première boucle de fluide réfrigérant A peut comporter à la place d'un accumulateur 15, une bouteille déshydratante 15' disposée en aval de l'échangeur de chaleur bifluide 5, plus précisément entre ledit échangeur de chaleur bifluide 5 et le premier échangeur de chaleur interne 19. Une telle bouteille déshydratante 15' disposée sur le côté haute pression du circuit de climatisation, c'est-à-dire en aval de l'échangeur de chaleur bifluide 5 et en amont d'un dispositif de détente, a un encombrement moindre ainsi qu'un coût réduit par rapport à d'autres solutions de séparation de phase comme un accumulateur qui serait disposé du côté basse pression du circuit de climatisation, c'est-à-dire en amont du compresseur 3, notamment en amont du premier échangeur de chaleur interne 19.

Le circuit de climatisation inversible indirecte 1 comporte également un dispositif de redirection du fluide réfrigérant en provenance du premier échangeur de chaleur 9 vers le deuxième échangeur de chaleur 13 ou vers la conduite de contournement 30.

Ce dispositif de redirection du fluide réfrigérant en provenance du premier échangeur de chaleur 9 peut notamment comporter :
- une première vanne d'arrêt 22 disposée en aval du premier point de raccordement 31, entre ledit premier point de raccordement 31 et le deuxième dispositif de détente 11. Une alternative à cette première vanne d'arrêt 22 peut être que le deuxième dispositif de détente 11 comporte une fonction d'arrêt de sorte à pouvoir bloquer le fluide réfrigérant et l'empêcher de circuler,
- une deuxième vanne d'arrêt 33 disposée sur la conduite de contournement 30, et
- un clapet antiretour 23 disposé en aval du deuxième échangeur de chaleur 13, entre ledit deuxième échangeur de chaleur 13 et le deuxième point de raccordement 32.

Une autre alternative (non représentée) peut également être de disposer une vanne trois-voies au niveau du premier point de raccordement 31.

Par vanne d'arrêt, clapet antiretour, vanne trois-voies ou dispositif de détente avec fonction d'arrêt, on entend ici des éléments mécaniques ou électromécaniques pouvant être pilotés par une unité de commande électronique embarquée dans le véhicule automobile.

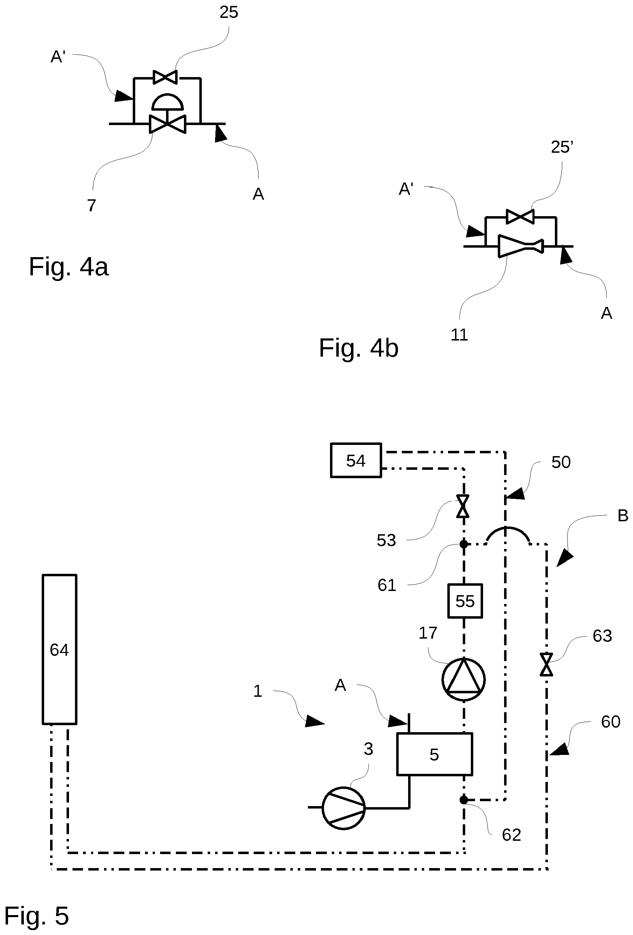

Comme le montrent plus en détail les figures 4a et 4b, le premier dispositif de détente 7 et le deuxième dispositif de détente 11 peuvent être contournés par une conduite de dérivation A', comportant notamment une vanne d'arrêt 25, 25'. Cette conduite de dérivation A' permet au fluide réfrigérant de contourner le premier dispositif de détente 7 et /ou le deuxième dispositif de détente 11 sans qu'il subisse une perte de pression. Une alternative pour que le fluide réfrigérant traverse le premier dispositif de détente 7 sans perte de pression est que cette dernière comporte une fonction d'ouverture maximum dans laquelle le fluide réfrigérant la traverse sans perte de pression.

La deuxième boucle de fluide caloporteur B, représentée en trait comprenant trois tirets et deux points sur les différentes figures, peut comporter quant à elle :
∘ l'échangeur de chaleur bifluide 5,
∘ une première conduite de circulation 50 de fluide caloporteur comportant un troisième échangeur de chaleur 54 destiné à être traversé par un flux d'air intérieur 100 au véhicule automobile, et reliant un premier point de jonction 61 disposé en aval de l'échangeur de chaleur bifluide 5 et un deuxième point de jonction 62 disposé en amont dudit échangeur de chaleur bifluide 5,
∘ une deuxième conduite de circulation 60 de fluide caloporteur comportant un quatrième échangeur de chaleur 64 destiné à être traversé par un flux d'air extérieur 200 au véhicule automobile, et reliant le premier point de jonction 61 disposé en aval de l'échangeur de chaleur bifluide 5 et le deuxième point de jonction 62 disposé en amont dudit échangeur de chaleur bifluide 5, et
∘ une pompe 17 disposée en aval ou en amont de l'échangeur de chaleur bifluide 5, entre le premier point de jonction 61 et le deuxième point de jonction 62.

Le quatrième échangeur de chaleur 64 est plus particulièrement disposé en amont du deuxième échangeur de chaleur 13 dans le sens de circulation du flux d'air extérieur 200.

Le circuit de climatisation inversible indirecte 1 comporte au sein de la deuxième boucle de fluide caloporteur B un dispositif de redirection du fluide caloporteur en provenance de l'échangeur de chaleur bifluide 5 vers la première conduite de circulation 50 et/ou vers la deuxième conduite de circulation 60.

Comme illustré sur les figures 1 à 3, ledit dispositif de redirection du fluide caloporteur en provenance de l'échangeur de chaleur bifluide 5 peut notamment comporter une quatrième vanne d'arrêt 63 disposée sur la deuxième conduite de circulation 60 afin de bloquer ou non le fluide caloporteur et de l'empêcher de circuler dans ladite deuxième conduite de circulation 60.

Le circuit de climatisation inversible indirect 1 peut également comporter un volet d'obstruction 310 du flux d'air intérieur 100 traversant le troisième échangeur de chaleur 54.

Ce mode de réalisation permet notamment de limiter le nombre de vannes sur la deuxième boucle de fluide caloporteur B et ainsi permet de limiter les coûts de production.

Selon un mode de réalisation alternatif illustré à la figure 5, le dispositif de redirection du fluide caloporteur en provenance de l'échangeur de chaleur bifluide 5 peut notamment comporter
- une quatrième vanne d'arrêt 63 disposée sur la deuxième conduite de circulation 60 afin de bloquer ou non le fluide caloporteur et de l'empêcher de circuler dans ladite deuxième conduite de circulation 60, et
- une cinquième vanne d'arrêt 53 disposée sur la première conduite de circulation 50 afin de bloquer ou non le fluide caloporteur et de l'empêcher de circuler dans ladite première conduite de circulation 50.

La deuxième boucle de fluide caloporteur B peut également comporter un élément électrique chauffant 55 du fluide caloporteur. Ledit élément électrique chauffant 55 est notamment disposé, dans le sens de circulation du fluide caloporteur, en aval de l'échangeur de chaleur bifluide 5, entre ledit échangeur de chaleur bifluide 5 et le premier point de jonction 61.

Le circuit de climatisation inversible indirect 1 peut également comporter un ventilateur de face avant 91 disposé en face avant du véhicule automobile afin de produire le flux d'air extérieur 200, notamment lorsque le véhicule automobile est à l'arrêt ou alors que sa vitesse n'est pas suffisante pour créer un flux d'air extérieur 200 avec suffisamment de débit. Le ventilateur de face avant 91 peut notamment être disposé en aval du quatrième échangeur de chaleur 64 et du deuxième échangeur de chaleur 13 dans le sens de circulation du flux d'air extérieur 200.

Le circuit de climatisation inversible indirect 1 peut également comporter un ventilateur interne 92 disposé au niveau du premier échangeur de chaleur 9 afin de produire le flux d'air intérieur 100. Le ventilateur interne 92 peut notamment être disposé en amont du premier échangeur de chaleur 9 et du troisième échangeur de chaleur 54 dans le sens de circulation du flux d'air intérieur 100.

Le circuit de climatisation inversible indirect 1 peut également comporter au niveau de la face avant du véhicule automobile, un dispositif d'obturation 93 de face avant pouvant notamment comporter une série de volets mobiles entre une position d'obturation où les volets bloquent le flux d'air extérieur 200 afin qu'il ne traverse pas le quatrième échangeur de chaleur 64 et le deuxième échangeur de chaleur 13 et une position ouverte où le flux d'air extérieur peut traverser lesdits échangeurs de chaleur 64, 13.

Comme le montrent les figures 1 à 3, le circuit de climatisation inversible indirecte comporte en outre une unité centrale de contrôle 40 représentée en pointillé commandant et pilotant divers éléments afin de permettre le passage d'un mode de fonctionnement à un autre ainsi que pour piloter les différents modes de fonctionnements.

Afin de commander notamment le passage d'un mode de fonctionnement à un autre, l' unité centrale de contrôle 40 peut notamment être reliée au dispositif de redirection du fluide réfrigérant en provenance du premier échangeur de chaleur 9 et plus particulièrement à la première vanne d'arrêt 22 et la deuxième vanne d'arrêt 33 afin de commander leur ouverture ou leur fermeture. L' unité centrale de contrôle 40 peut également être reliée aux vannes d'arrêt 25 et/ou 25' des conduites de dérivation A' permettant le contournement du premier dispositif de détente 7 et du deuxième dispositif de détente 11. Ces différentes liaisons ne sont pas représentées sur les figures. L' unité centrale de contrôle 40 peut également être reliée au dispositif de redirection du fluide caloporteur afin de contrôler la circulation du fluide caloporteur dans la deuxième boucle de fluide caloporteur B.

L' unité centrale de contrôle 40 peut être connectée au premier dispositif de détente 7 lorsque celui-ci est notamment une vanne électronique d'expansion, afin de piloter son ouverture et de définir la pression du fluide réfrigérant en sortie de ladite vanne électronique d'expansion. De même, si le deuxième dispositif de détente 11 est une vanne électronique d'expansion, l' unité centrale de contrôle 40 peut être connectée à cette dernière afin de piloter son ouverture et de définir la pression du fluide réfrigérant en sortie de ladite vanne électronique d'expansion.

L' unité centrale de contrôle 40 peut en outre être connectée au compresseur 3 afin de piloter son arrêt, sa mise en route. L' unité centrale de contrôle 40 peut également définir le régime du compresseur 3 et ainsi définir la pression du fluide réfrigérant en sortie dudit compresseur 3.

De même, l' unité centrale de contrôle 40 peut être connectée à la pompe 17 afin de piloter son arrêt, sa mise en route et ainsi contrôler la mise en route ou l'arrêt de la deuxième boucle de fluide caloporteur B.

L' unité centrale de contrôle 40 peut être également connectée au dispositif d'obturation 93 de face avant afin de contrôler son ouverture et sa fermeture et ainsi influer sur le flux d'air extérieur 200.

Le circuit de climatisation inversible indirect 1 peut comporter un capteur de pression 41 du fluide réfrigérant à haute pression. Ce capteur 41 est disposé en aval de l'échangeur de chaleur bifluide 5, entre ledit échangeur de chaleur bifluide 5 et le premier dispositif de détente 7. Lorsque le circuit inversible indirect 1 comporte un premier échangeur de chaleur interne 19, le capteur de pression 41 du fluide réfrigérant à haute pression est disposé entre l'échangeur de chaleur bifluide 5 et le premier échangeur de chaleur interne 19 afin que les mesures de pression et de température ne soient pas affectées par ledit premier échangeur de chaleur interne 19. Ce capteur de pression 41 du fluide réfrigérant à haute pression est connecté à l' unité centrale de contrôle 40 et permet à cette dernière de connaître la pression du fluide réfrigérant en sortie de l'échangeur de chaleur bifluide 5.

Le circuit de climatisation inversible indirect 1 peut comporter un capteur de température 42 de la température extérieure ainsi qu'un capteur de pression 43 du fluide réfrigérant à pression intermédiaire. Ce capteur de pression 43 est disposé en aval du premier dispositif de détente 7, entre ledit premier dispositif de détente 7 et le deuxième dispositif de détente 11. Plus particulièrement, le capteur de pression 43 du fluide réfrigérant à pression intermédiaire est disposé en aval du premier échangeur de chaleur 9, entre ledit premier échangeur de chaleur 9 et le premier point de raccordement 31, comme illustré sur les figures 1, 2 et 3. Il est néanmoins tout à fait possible de disposer ce capteur de pression 43 en amont du premier échangeur de chaleur 9, entre le premier dispositif de détente 7 et ledit premier échangeur de chaleur 9.

Le capteur de température 42 de la température extérieure ainsi que le capteur de pression 43 du fluide réfrigérant à pression intermédiaire sont tout deux connectés à l' unité centrale de contrôle 40 et permettent à cette dernière de connaître la température de l'air extérieure au véhicule automobile ainsi que la pression du fluide réfrigérant en sortie du premier dispositif de détente 7.

Le circuit de climatisation inversible indirect 1 comporte un capteur de pression 44 du fluide réfrigérant à basse pression. Ce capteur de pression 44 est disposé en aval de la conduite de contournement 30, plus précisément entre le deuxième point de raccordement 32 et le compresseur 3. Lorsque le circuit inversible indirect 1 comporte un premier échangeur de chaleur interne 19, le capteur de pression 41 du fluide réfrigérant à basse pression est disposé entre le deuxième point de raccordement 32 et le premier échangeur de chaleur interne 19 afin que la mesure de pression ne soit pas affectée par ledit premier échangeur de chaleur interne 19.

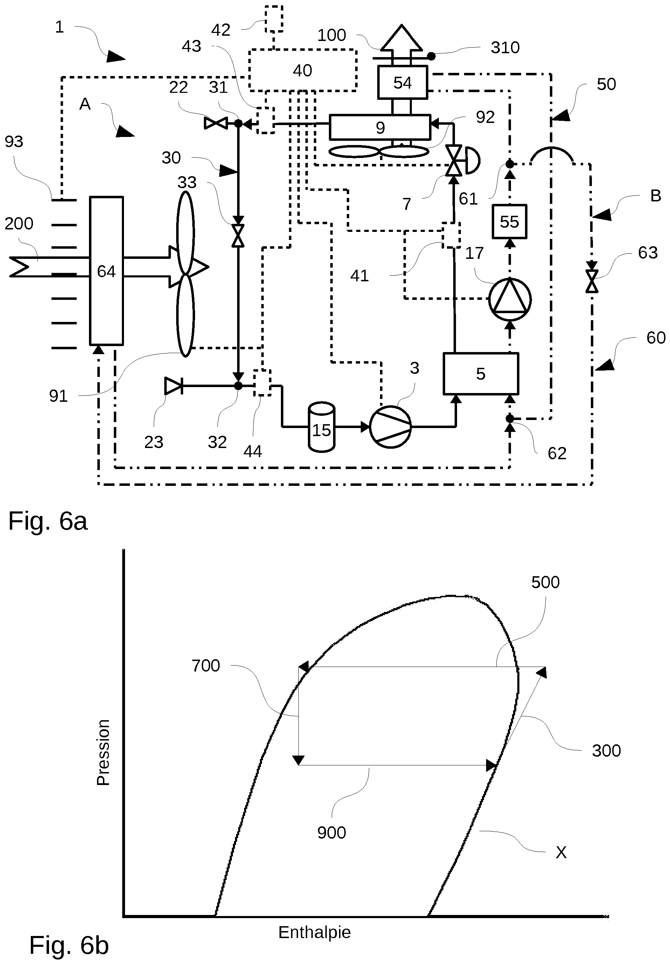

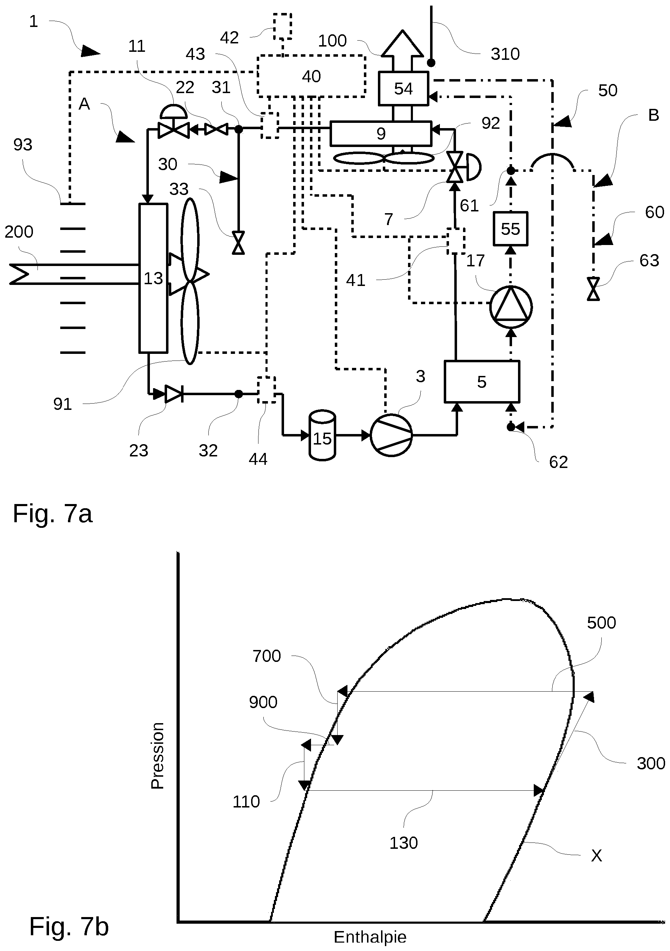

Aux figures 6a à 7b sont illustrés des procédés de fonctionnement du circuit de climatisation inversible indirect 1 selon différents modes de fonctionnement. Sur les figures 6a et 7a, seuls les éléments dans lesquels le fluide réfrigérant et/ou le fluide caloporteur circulent sont représentés. Le sens de circulation du fluide réfrigérant et/ou du fluide caloporteur est représenté par des flèches.

La figure 6a montre plus particulièrement un procédé de fonctionnement selon un mode de refroidissement dans lequel :
- le fluide réfrigérant passe successivement dans le compresseur 3, l'échangeur de chaleur bifluide 5, le premier dispositif de détente 7 et le premier échangeur de chaleur 9 avant de retourner au compresseur 3,
- une portion du fluide caloporteur en sortie de l'échangeur de chaleur bifluide 5 circule dans le troisième échangeur de chaleur 54 de la première conduite de circulation 50 et une autre portion du fluide caloporteur en sortie de l'échangeur de chaleur bifluide 5 circule dans le quatrième échangeur de chaleur 64 de la deuxième conduite de circulation 50,
- le volet d'obstruction 310 est fermé de sorte à empêcher le flux d'air intérieur 100 de circuler dans le troisième échangeur de chaleur 54.

Les variations de pression et d'enthalpie que subit le fluide réfrigérant lors de ce mode de refroidissement, sont illustrées sur le diagramme pression / enthalpie de la figure 6b. La courbe X représente la courbe de saturation du fluide réfrigérant.

Le fluide réfrigérant à l'entrée du compresseur 3 est en phase gazeuse. Le fluide réfrigérant subit une compression, illustrée par la flèche 300, en passant dans le compresseur 3. On parle alors de fluide réfrigérant à haute pression.

Le fluide réfrigérant à haute pression traverse l'échangeur de chaleur bifluide 5 et subit une perte d'enthalpie, illustrée par la flèche 500, du fait du passage en phase liquide du fluide réfrigérant et du transfert d'enthalpie vers le fluide caloporteur de la deuxième boucle de fluide caloporteur B. Le fluide réfrigérant perd alors de l'enthalpie tout en restant à une pression constante.

Le fluide réfrigérant passe ensuite dans le premier dispositif de détente 7. Le fluide réfrigérant subit une perte de pression isenthalpique, illustrée par la flèche 700 et croise la courbe de saturation X, ce qui le fait passer dans un état de mélange liquide plus gaz. On parle alors de fluide réfrigérant à basse pression.

Le fluide réfrigérant à basse pression passe ensuite dans le premier échangeur de chaleur 9 où il gagne de l'enthalpie comme illustré par la flèche 900 en refroidissant le flux d'air intérieur 100. Le fluide réfrigérant à basse pression rejoint ainsi la courbe de saturation X et repasse à l'état gazeux.

A la sortie du premier échangeur de chaleur 9, le fluide réfrigérant à basse pression est redirigé vers la conduite de contournement 30 avant de rentrer de nouveau dans le compresseur 3.

Ce mode de refroidissement est utile pour refroidir le flux d'air intérieur 100.

Dans ce mode de refroidissement, le dispositif de redirection du fluide réfrigérant est configuré de sorte que le fluide réfrigérant ne circule pas dans le deuxième échangeur de chaleur 13.

Cela est notamment possible en fermant la première vanne d'arrêt 22 et en ouvrant la deuxième vanne d'arrêt 33 afin que le fluide réfrigérant à basse pression en sortie du premier échangeur de chaleur 9 ne circule pas dans le deuxième échangeur de chaleur 13 et passe dans la conduite de contournement 30.

Le clapet antiretour 23 permet d'éviter que du fluide réfrigérant à basse pression en sortie de la conduite de contournement 30 ne reflue vers le deuxième échangeur de chaleur 13.

Selon une première variante non représentée, le mode de refroidissement peut fonctionner lorsque le circuit de climatisation inversible indirect 1 comporte un premier échangeur de chaleur interne 19. Cette première variante du mode de refroidissement comporte les mêmes étapes que le mode de refroidissement illustré à la figure 6a, à la différence que :
- avant d'arriver dans le premier dispositif de détente 7, le fluide réfrigérant à haute pression passe par le premier échangeur de chaleur interne 19, et
- avant d'arriver dans le compresseur 3, le fluide réfrigérant à basse pression en provenance de la conduite de contournement 30 passe également par le premier échangeur de chaleur interne 19.

Le premier échangeur de chaleur interne 19 permet une diminution de l'enthalpie du fluide réfrigérant à haute pression avant son entrée dans le premier échangeur de chaleur 9 en transférant une partie de son enthalpie au fluide réfrigérant à basse pression en amont du compresseur 3. Le premier échangeur de chaleur interne 19 permet une augmentation de la puissance de refroidissement et améliore le coefficient de performance (ou COP pour « coefficient of performance ») en diminuant l'enthalpie du fluide réfrigérant à haute pression en sortie de l'échangeur de chaleur bifluide 5 et en la transférant au fluide réfrigérant à basse pression avant son entrée dans le compresseur 3.

Selon une deuxième variante non représentée, le mode de refroidissement peut fonctionner lorsque le circuit de climatisation inversible indirect 1 comporte un premier 19 et un deuxième 19' échangeur de chaleur interne. Cette deuxième variante du mode de refroidissement comporte les mêmes étapes que le mode de refroidissement illustré à la figure 6a, à la différence que :
- avant d'arriver dans le premier dispositif de détente 7, le fluide réfrigérant à haute pression passe successivement par le premier échangeur de chaleur interne 19 et le deuxième échangeur de chaleur interne 19', et
- avant d'arriver dans le compresseur 3, le fluide réfrigérant à basse pression en provenance du premier échangeur de chaleur 9 passe dans le deuxième échangeur de chaleur interne 19' en traversant la conduite de contournement 30 et passe ensuite par le premier échangeur de chaleur interne 19.

Dans cette deuxième variante du mode de refroidissement, les deux échangeurs de chaleur interne 19 et 19' sont actifs et leurs effets s'additionnent. L'utilisation des échangeurs de chaleur interne 19 et 19' l'un après l'autre, permet de diminuer l'enthalpie du fluide réfrigérant à haute pression en entrée du premier dispositif de détente 7. Le fluide réfrigérant à haute pression et à l'état liquide en sortie de l'échangeur de chaleur bifluide 5 est refroidi par le fluide réfrigérant à l'état gazeux et à basse pression sortant du premier échangeur de chaleur 9. La différence d'enthalpie aux bornes du premier échangeur de chaleur 9 augmente sensiblement ce qui permet à la fois, une augmentation de la puissance frigorifique disponible au niveau dudit premier échangeur de chaleur 9 qui refroidit le flux d'air 100 et cela entraîne donc une amélioration du coefficient de performance.

De plus, l'ajout d'enthalpie au fluide réfrigérant à basse pression au niveau des premier 19 et deuxième 19' échangeurs de chaleur interne permet de limiter la proportion de fluide réfrigérant en phase liquide avant sont entrée dans le compresseur 3, notamment lorsque le circuit de climatisation 1 comporte une bouteille déshydratante 15 disposée en aval de l'échangeur de chaleur bifluide 5.

Au niveau de la deuxième boucle de fluide caloporteur B, le fluide caloporteur gagne de l'enthalpie issue du fluide réfrigérant au niveau de l'échangeur de chaleur bifluide 5.

Comme illustré sur la figure 6a, une portion du fluide caloporteur circule dans la première conduite de circulation 50 et traverse le troisième échangeur de chaleur 54. Le fluide caloporteur ne perd cependant pas d'enthalpie, car le volet d'obstruction 310 est refermé et bloque le flux d'air intérieur 100 de sorte qu'il ne traverse pas le troisième échangeur de chaleur 54.

Une autre portion du fluide caloporteur circule dans la deuxième conduite de circulation 60 et traverse le quatrième échangeur de chaleur 64. Le fluide caloporteur perd de l'enthalpie au niveau dudit échangeur de chaleur 64 en la relâchant dans le flux d'air extérieur 200. La quatrième vanne d'arrêt 63 est ouverte pour permettre le passage du fluide caloporteur.

Une solution alternative (non représentée) pour que le fluide caloporteur n'échange pas avec le flux d'air intérieur 100 au niveau du troisième échangeur de chaleur 54, est de munir comme sur la figure 4 la première conduite de circulation 50 de la cinquième vanne d'arrêt 53 et de la fermer de sorte à empêcher le fluide caloporteur de circuler dans ladite première conduite de circulation 50.

La figure 7a montre plus particulièrement un procédé de fonctionnement selon un mode pompe à chaleur dans lequel :
- le fluide réfrigérant passe successivement dans le compresseur 3, l'échangeur de chaleur bifluide 5, le premier dispositif de détente 7, le premier échangeur de chaleur 9, le deuxième dispositif de détente 11 et le deuxième échangeur de chaleur 13 avant de retourner au compresseur 3,
- le fluide caloporteur en sortie de l'échangeur de chaleur bifluide 5 circule uniquement dans le troisième échangeur de chaleur 54 de la première conduite de circulation 50,
- le volet d'obstruction 310, lorsqu'il est présent, est ouvert de sorte à permettre au flux d'air intérieur 100 de circuler dans le troisième échangeur de chaleur 54.

Les variations de pression et d'enthalpie que subit le fluide réfrigérant lors de ce mode pompe à chaleur, sont illustrées sur le diagramme pression / enthalpie de la figure 7b. La courbe X représente la courbe de saturation du fluide réfrigérant.

Le fluide réfrigérant à l'entrée du compresseur 3 est en phase gazeuse. Le fluide réfrigérant subit une compression, illustrée par la flèche 300, en passant dans le compresseur 3. On parle ici de fluide réfrigérant à haute pression.

Le fluide réfrigérant à haute pression traverse l'échangeur de chaleur bifluide 5 et subit une perte d'enthalpie, illustrée par la flèche 500, du fait du passage en phase liquide du fluide réfrigérant et du transfert d'enthalpie vers le fluide caloporteur de la deuxième boucle de fluide caloporteur B. Le fluide réfrigérant à haute pression perd alors de l'enthalpie tout en restant à une pression constante.

Le fluide réfrigérant à haute pression passe ensuite dans le premier dispositif de détente 7. Le fluide réfrigérant subit une première perte de pression isenthalpique, illustrée par la flèche 700 et croise la courbe de saturation X, ce qui le fait passer dans un état de mélange liquide plus gaz. On parle ici de fluide à pression intermédiaire.

Le fluide réfrigérant à pression intermédiaire traverse ensuite le premier échangeur de chaleur 9 où il continue de perdre de l'enthalpie comme illustré par la flèche 900 en réchauffant le flux d'air intérieur 100.

A la sortie du premier échangeur de chaleur 9, le fluide réfrigérant à pression intermédiaire est redirigé vers le deuxième échangeur de chaleur 13. Avant d'arriver au deuxième échangeur de chaleur 13, le fluide réfrigérant à pression intermédiaire passe dans le deuxième dispositif de détente 11 où il subit une deuxième perte de pression isenthalpique illustrée par la flèche 110. On parle alors de fluide à basse pression.

Le fluide réfrigérant à basse pression traverse ensuite le deuxième échangeur de chaleur 13 où il gagne de l'enthalpie, comme illustré par la flèche 130, en absorbant de l'enthalpie du flux d'air extérieur 200. Le fluide réfrigérant à basse pression rejoint ainsi la courbe de saturation X et repasse à l'état gazeux.

Le fluide réfrigérant à basse pression rejoint ensuite le compresseur 3.

Dans ce mode pompe à chaleur, le dispositif de redirection du fluide réfrigérant est configuré de sorte que le fluide réfrigérant à pression intermédiaire ne circule pas dans la conduite de contournement 30.

Cela est notamment possible en ouvrant la première vanne d'arrêt 22 et en fermant la deuxième vanne d'arrêt 33 afin que le fluide réfrigérant à pression intermédiaire en sortie du premier échangeur de chaleur 9 ne circule pas dans la conduite de contournement 30 et passe dans le deuxième dispositif de détente 11 et le deuxième échangeur de chaleur 13.

Selon une première variante non représentée, le mode pompe à chaleur peut fonctionner lorsque le circuit de climatisation inversible indirect 1 comporte un premier échangeur de chaleur interne 19. Cette variante du mode pompe à chaleur comporte les mêmes étapes que le mode de déshumidification illustré à la figure 7a, à la différence que :
- avant d'arriver dans le premier dispositif de détente 7, le fluide réfrigérant à haute pression passe par le premier échangeur de chaleur interne 19, et
- avant d'arriver dans le compresseur 3, le fluide réfrigérant à basse pression en provenance du deuxième échangeur de chaleur 13 passe également par le premier échangeur de chaleur interne 19.

Selon une deuxième variante non représentée, le mode pompe à chaleur peut fonctionner lorsque le circuit de climatisation inversible indirect 1 comporte un premier 19 et un deuxième 19' échangeur de chaleur interne. Cette deuxième variante du mode de refroidissement comporte les mêmes étapes que le mode de refroidissement illustré à la figure 6a, à la différence qu'avant d'arriver dans le premier dispositif de détente 7, le fluide réfrigérant à haute pression passe successivement par le premier échangeur de chaleur interne 19 et le deuxième échangeur de chaleur interne 19'.

Cependant, le deuxième échangeur de chaleur interne 19' n'a pas d'influence, car le fluide réfrigérant ne traverse pas la boucle de contournement 30.

Le premier échangeur de chaleur interne 19 permet une diminution de l'enthalpie du fluide réfrigérant à haute pression avant son entrée dans le premier échangeur de chaleur 9 en transférant une partie de son enthalpie au fluide réfrigérant à basse pression en amont du compresseur 3. L'ajout d'enthalpie au fluide réfrigérant à basse pression au niveau du premier échangeur de chaleur interne 19 permet de limiter la proportion de fluide réfrigérant à basse pression en phase liquide avant son entrée dans le compresseur 3, notamment lorsque le circuit de climatisation 1 comporte une bouteille déshydratante 15 disposée en aval de l'échangeur de chaleur bifluide 5.

L'effet du premier échangeur de chaleur interne 19 peut être limité lorsque ce dernier est de faible longueur, par exemple avec une longueur comprise entre 50 et 120mm. Cette taille permet de limiter les échanges de chaleur entre le fluide réfrigérant à haute pression et le fluide réfrigérant à basse pression de sorte que l'enthalpie échangée permet de limiter la proportion de fluide réfrigérant en phase liquide avant son entrée dans le compresseur 3 sans pour autant pénaliser l'efficacité du mode pompe à chaleur. En effet, le but de ce mode pompe à chaleur est de relâcher le plus d'enthalpie possible dans le flux d'air intérieur 100 afin de le réchauffer au niveau du premier échangeur de chaleur 9.

Au niveau de la deuxième boucle de fluide caloporteur B, le fluide caloporteur gagne de l'enthalpie issue du fluide réfrigérant au niveau de l'échangeur de chaleur bifluide 5.

Comme illustré sur la figure 7a, le fluide caloporteur circule dans la première conduite de circulation 50 et traverse le troisième échangeur de chaleur 54. Le fluide caloporteur perd de l'enthalpie en réchauffant le flux d'air intérieur 100. Pour cela, le volet d'obstruction 310 est ouvert ou la cinquième vanne d'arrêt 53 est ouverte. La quatrième vanne d'arrêt 63 est quant à elle fermée pour empêcher le passage du fluide caloporteur dans la deuxième conduite de circulation 60.

Ce mode pompe à chaleur est utile pour réchauffer le flux d'air intérieur 100 à la fois au niveau du premier échangeur de chaleur 9 et du troisième échangeur de chaleur 54 en absorbant de l'enthalpie du flux d'air extérieur 200 au niveau du deuxième échangeur de chaleur 13.

De plus, l'élément électrique chauffant 55 peut être en fonctionnement afin de fournir un apport supplémentaire d'énergie calorifique au fluide caloporteur pour réchauffer le flux d'air intérieur 100.

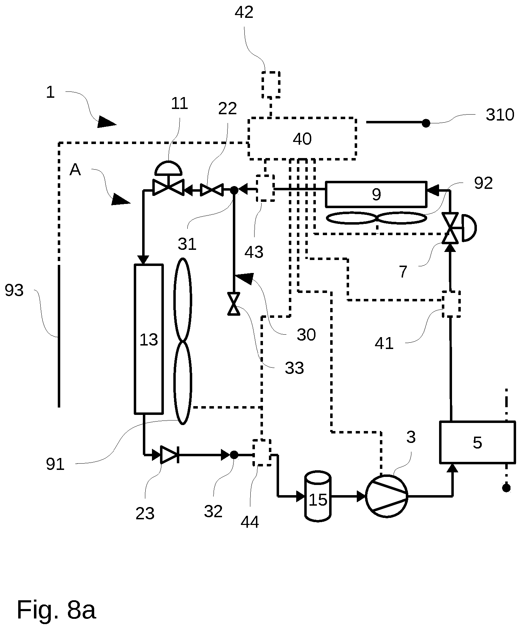

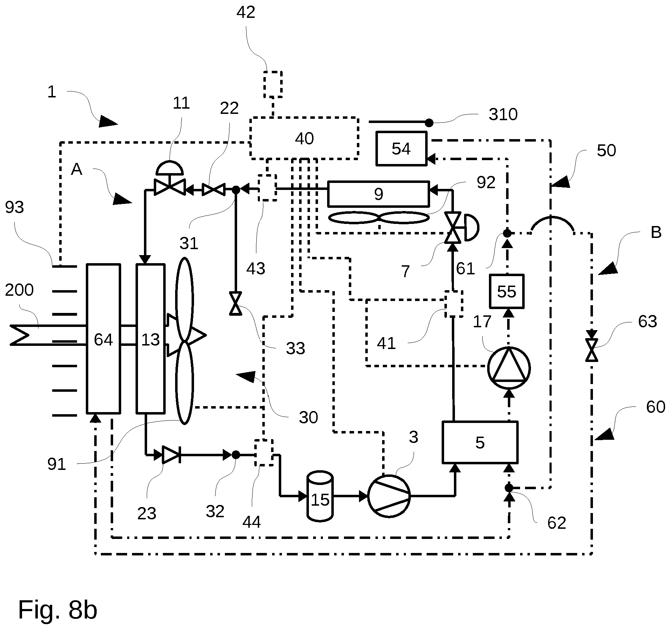

Les figures 8a et 8b montrent un procédé de gestion selon un mode de dégivrage qui se déclenche lorsque du givre est détecté au niveau du deuxième échangeur de chaleur 13. La détection du givre au niveau du deuxième échangeur de chaleur 13 peut être effectuée selon plusieurs méthodes connues de l'homme du métier, comme par exemple au moyen de capteurs dédiés ou alors en mesurant et calculant divers paramètres, notamment en mode pompe à chaleur, tels que la pression du fluide réfrigérant au niveau du capteur de pression 44 du fluide réfrigérant à basse pression, le coefficient de performance, la vitesse du compresseur 3. Le givre peut apparaître sur la surface extérieure du deuxième échangeur de chaleur 13 lorsque le circuit de climatisation inversible indirect 1 fonctionne en mode pompe à chaleur.

Dans un premier temps, illustré à la figure 8a, suite à la détection de givre au niveau du deuxième échangeur de chaleur 13, la deuxième boucle de fluide caloporteur B est mise à l'arrêt. Pour cela, l' unité centrale de contrôle 40 stoppe la pompe 17 et le fluide caloporteur ne circule plus dans la deuxième boucle de fluide caloporteur B. L'arrêt de ladite deuxième boucle de fluide caloporteur B entraîne le fait qu'il n'y a plus ou très peu d'échange de chaleur entre le fluide réfrigérant et le fluide caloporteur au niveau de l'échangeur de chaleur bifluide 5.

De même, le flux d'air intérieur 100 et le flux d'air extérieur 200 sont stoppés. Afin de stopper le flux d'air intérieur 100, l' unité centrale de contrôle 40 peut notamment arrêter le ventilateur intérieur 92. Afin de stopper le flux d'air extérieur 200, l' unité centrale de contrôle 40 peut notamment arrêter le ventilateur de face avant 91 ainsi que fermer le dispositif d'obturation 93 s'il est présent.

Toujours dans ce premier temps, l' unité centrale de contrôle 40 commande la circulation du fluide réfrigérant de la première boucle de fluide réfrigérant A afin qu'il passe dans le compresseur 3 où ledit fluide réfrigérant est comprimé. Le compresseur peut notamment être piloté par l' unité centrale de contrôle pour qu'il ait une montée en régime progressive. Une telle montée en régime progressive permet d'économiser le compresseur 3 ainsi que le premier échangeur de chaleur 9 afin de ne pas les endommager avec une montée en régime et en pression du fluide réfrigérant trop brutale. De plus cela permet de diminuer les nuisances sonores liées à la montée en régime du compresseur 3. Cette montée en régime peut notamment avoir lieu entre 2000 tr/min et un régime maximum Nmax compris entre 4500 et 8500 tr/min.

Le fluide réfrigérant passe ensuite dans l'échangeur de chaleur bifluide 5 qu'il traverse sans échange de chaleur avec le fluide caloporteur du fait que la deuxième boucle de fluide caloporteur B est à l'arrêt.

Le fluide réfrigérant traverse ensuite le premier dispositif de détente 7 que ledit fluide réfrigérant traverse sans perte de pression. Pour cela, l' unité centrale de contrôle 40 commande soit directement ledit premier dispositif de détende 7 afin qu'il soit ouvert complètement, par exemple s'il s'agit d'une vanne d'expansion électronique ou alors en commandant son contournement au niveau d'une conduite de dérivation A', si une telle boucle de dérivation A' est présente.

Le fluide réfrigérant traverse ensuite le premier échangeur de chaleur 9 où il n'échange pas de chaleur avec le flux d'air intérieur 100 du fait que ce dernier n'est pas présent.

Le fluide réfrigérant passe ensuite dans le deuxième dispositif de détente 7 qu'il traverse sans perte de pression. Pour cela, l' unité centrale de contrôle 40 commande soit directement ledit deuxième dispositif de détende 7 afin qu'il soit ouvert complètement, par exemple s'il s'agit d'une vanne d'expansion électronique ou alors en commandant son contournement au niveau d'une conduite de dérivation A', si une telle boucle de dérivation A' est présente, par exemple si le deuxième dispositif de détente 11 est un orifice tube.

Le fluide réfrigérant traverse ensuite le deuxième échangeur de chaleur 13 où il n'échange pas de chaleur avec le flux d'air extérieur 200 du fait que ce dernier n'est pas présent. Le fluide réfrigérant rejoint ensuite le compresseur 3.

Ce premier temps permet une augmentation de la pression et de la température du fluide réfrigérant au sein de la première boucle de fluide réfrigérant. Le fluide réfrigérant va donc gagner en température et lorsqu'il va traverser le deuxième échangeur de chaleur 13, il va réchauffer ledit deuxième échangeur de chaleur 13 entraînant un début de dégivrage.

Dans un second temps, illustré à la figure 8b, lorsque la pression du fluide réfrigérant mesurée par le capteur de pression 44 du fluide réfrigérant à basse pression est telle que ledit fluide réfrigérant soit à l'état diphasique avec une température de saturation supérieure à 0°C :
▪ la deuxième boucle de fluide caloporteur B est remise en route de sorte que le fluide caloporteur circule dans l'échangeur bifluide 5 et le quatrième échangeur de chaleur 64,
▪ le compresseur 3 est arrêté, et
▪ un flux d'air extérieur 200 est généré.

Chaque fluide réfrigérant a une valeur de pression particulière pour laquelle sa température de saturation est supérieure ou égale à 0°C. Par exemple, un fluide réfrigérant tel que le R134a a une température de saturation supérieure à 0°C lorsqu'il est à une pression supérieure à 2,92 bars.

Un fluide réfrigérant tel que le R1234yf a quant à lui une température de saturation supérieure ou égale à 0°C lorsqu'il est à une pression supérieure ou égale à 3,16 bars.

Ainsi dans le cadre de l'invention, le second temps de ce mode de dégivrage peut s'enclencher lorsque le fluide réfrigérant au niveau du capteur de pression 44 du fluide réfrigérant à basse pression est à une pression supérieure à 3 bars lorsqu'il s'agit de R134a. Ou supérieure à 3,2 bars lorsqu'il s'agit de R1234yf.

Le second temps du mode dégivrage peut également se déclencher lorsque la pression du fluide réfrigérant mesurée au niveau du capteur de pression 41 du fluide réfrigérant à haute pression est supérieure à 18 bars, de préférence supérieure ou égale à 20 bars.

Le second temps du mode de dégivrage peut également se déclencher lorsque la pression du fluide réfrigérant mesurée au niveau du capteur de pression 43 du fluide réfrigérant à pression intermédiaire est supérieure ou égale à 10 bars. Cela permet notamment d'éviter que le deuxième échangeur de chaleur 13 ne soit endommagé par un fluide réfrigérant le traversant à trop haute pression.

Toujours lors de ce deuxième temps du mode de dégivrage, la deuxième boucle de fluide caloporteur B est remise en route par démarrage de la pompe 17. L' unité centrale de contrôle 40 peut notamment commander le démarrage de cette pompe 17 et contrôler le débit du fluide caloporteur afin qu'il soit compris entre 150 et 800 1/h.

L' unité centrale de contrôle 40 pilote plus particulièrement la deuxième boucle de fluide caloporteur B de sorte que le fluide caloporteur circule dans l'échangeur bifluide 5 et le quatrième échangeur de chaleur 64. Pour cela l' unité centrale de contrôle 40 pilote le dispositif de redirection du fluide caloporteur notamment en ouvrant la quatrième vanne d'arrêt 63. Du fait que le flux d'air intérieur 100 est stoppé, le fluide caloporteur peut circuler dans le troisième échangeur de chaleur 54 sans échanger de chaleur. Si la deuxième boucle de fluide caloporteur B comporte une cinquième vanne d'arrêt 53, celle-ci peut être fermée pour rediriger l'intégralité du fluide réfrigérant vers le quatrième échangeur de chaleur.

La circulation du fluide caloporteur dans la deuxième boucle de fluide caloporteur B permet, au niveau de l'échangeur de chaleur bifluide 5, de récupérer de l'énergie calorifique accumulée dans le fluide réfrigérant lors du premier temps du mode de dégivrage. Cette énergie calorifique est alors transportée au niveau du quatrième échangeur de chaleur 64 par le fluide caloporteur.

Afin de générer de nouveau un flux d'air extérieur 200, l' unité centrale de contrôle 40 peut piloter le dispositif d'obturation 93 afin qu'il s'ouvre, si ce dernier est présent. De plus, l' unité centrale de contrôle 40 peut démarrer le ventilateur de face avant 91, notamment si le véhicule automobile est à l'arrêt.

La génération du flux d'air extérieur 200 permet que le quatrième échangeur de chaleur 64 puisse transférer de l'énergie calorifique depuis le fluide caloporteur vers le flux d'air extérieur 200. Comme le quatrième échangeur de chaleur 64 est disposé en amont du deuxième échangeur de chaleur 13 dans le sens de circulation du flux d'air extérieur 200, l'air réchauffé au niveau du quatrième échangeur de chaleur 64 va permettre le dégivrage du deuxième échangeur de chaleur 13.

Afin d'évacuer plus efficacement l'eau résultant de la fonte du givre, le ventilateur de face avant 91 peut plus particulièrement être mis en route à vitesse maximale pendant une durée comprise entre 10 et 60s.

Un cycle de mode de dégivrage complet peut par exemple s'étendre sur une durée maximum comprise entre 5 et 10 min.

Ce mode de dégivrage permet ainsi la fonte du givre au niveau du deuxième échangeur de chaleur 13 sans qu'il n'y ait de répercussions pour l'utilisateur à l'intérieur de l'habitacle. En effet, contrairement à une solution où le dégivrage se fait par un passage en mode refroidissement, aucun air froid n'est renvoyé dans l'habitacle.

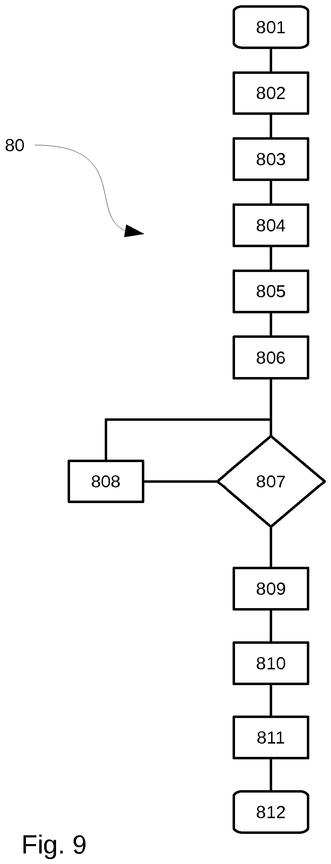

La figure 9 montre un logigramme 80 d'un exemple d'un procédé de fonctionnement du circuit de climatisation inversible indirect 1 dont le fluide réfrigérant est du R1234yf, dans un mode de dégivrage.

L'étape 801 correspond à une étape de détection de la présence de givre au niveau du deuxième échangeur de chaleur 13. Si cette détection est positive il est possible de passer à l'étape 802.

L'étape 802 correspond à une étape de détection si le véhicule est à l'arrêt ou si le dispositif d'obturation 93 est fermé. Cela permet de vérifier si le flux d'air extérieur 200 est bien bloqué. Si le dispositif d'obturation 93 est en position ouverte, l'unité centrale de contrôle 40 commande sa fermeture. Lorsque le flux d'air extérieur 200 est bloqué il est possible de passer à l'étape 803.

L'étape 803 correspond à une étape d'arrêt du ventilateur de face avant 91, du ventilateur interne 92 et de la pompe 17, si l'un ou l'autre de ces éléments était en fonctionnement. Lorsque ces trois éléments sont à l'arrêt, il est possible de passer à l'étape 804.

L'étape 804 correspond à une étape d'ouverture de la première vanne d'arrêt 22 et fermeture de la deuxième vanne d'arrêt 33. Le premier 7 et le deuxième 11 dispositif de détente sont également ouverts complètement ou alors contournés afin que le fluide réfrigérant les traverse sans perte de pression. Lorsque ces éléments sont dans cette configuration, il est possible de passer à l'étape 805.

L'étape 805 est une étape de démarrage du compresseur 3 et d'augmentation de son régime de 2000tr/min à régime maximum Nmax compris entre 4500 et 8500 tr/min.

Lors de cette montée en régime, la pression du fluide réfrigérant est mesurée au niveau des capteurs de pression 41, 43 et 44 dans une étape 806.

Dans une étape de contrôle 807, si :
- la pression du fluide réfrigérant mesurée au niveau du capteur de pression 41 du fluide réfrigérant à haute pression est inférieure à 20 bars, ou si
- la pression du fluide réfrigérant mesurée au niveau du capteur de pression 43 du fluide réfrigérant à pression intermédiaire est inférieure à 10 bars, ou si
- la pression du fluide réfrigérant mesurée au niveau du capteur de pression 44 du fluide réfrigérant à basse pression est inférieure à 3,2 bars,
alors compresseur 3 continue sa montée en régime dans une étape 808.

Si l'une de ses conditions n'est plus remplie, alors la pompe 17 est mise en marche avec un débit compris entre 150 et 800 1/h dans une étape 809. Lorsque le débit du fluide caloporteur atteint est compris dans cette plage, il est possible de passer l'étape 810.

L'étape 810 correspond à une étape d'ouverture du dispositif d'obturation 93.

Lorsque le dispositif d'obturation 93 est ouvert, le compresseur 3 est arrêté lors d'une étape 811.

Après l'arrêt du compresseur 3, le ventilateur de face avant 91 est mis en marche à vitesse maximum pendant un intervalle de temps compris entre 10 et 60s.

D'autres modes de fonctionnement tels que des modes de déshumidification, de dégivrage ou de chauffage peuvent également être envisagés avec une telle architecture du circuit de climatisation inversible indirect 1.

Ainsi, on voit bien que de part son architecture et son procédé de fonctionnement, le circuit de climatisation inversible indirect 1, permet un mode de fonctionnement en pompe à chaleur avec un coefficient de performance optimal.

## Revendications

1. Procédé de fonctionnement d'un circuit de climatisation inversible indirect (1) pour véhicule automobile, ledit circuit de climatisation inversible indirect (1) comportant :
une première boucle de fluide réfrigérant (A) dans laquelle circule un fluide réfrigérant, ladite première boucle de fluide réfrigérant (A) comportant dans le sens de circulation du fluide réfrigérant :
un compresseur (3),
un échangeur de chaleur bifluide (5)
un premier dispositif de détente (7),
un premier échangeur de chaleur (9) étant destiné à être traversé par un flux d'air intérieur (100) au véhicule automobile,
un deuxième dispositif de détente (11),
un deuxième échangeur de chaleur (13) étant destiné à être traversé par un flux d'air extérieur (200) au véhicule automobile, et
une conduite de contournement (30) du deuxième échangeur de chaleur (13), une deuxième boucle de fluide caloporteur (B) dans laquelle circule un fluide caloporteur, une deuxième conduite de circulation (60) de fluide caloporteur comportant un quatrième échangeur de chaleur (64) destiné à être traversé par le flux d'air extérieur (200), ledit quatrième échangeur de chaleur (64) étant disposé en amont du deuxième échangeur de chaleur (13) dans le sens de circulation du flux d'air extérieur (200),
l'échangeur de chaleur bifluide (5) étant agencé conjointement sur la première boucle de fluide réfrigérant (A) en aval du compresseur (3), entre ledit compresseur (3) et le premier dispositif de détente (7), et sur la deuxième boucle de fluide caloporteur (B), de façon à permettre les échanges de chaleur entre la première boucle de fluide réfrigérant (A) et la deuxième boucle de fluide caloporteur (B),
le circuit de climatisation inversible indirect (1) comportant en outre :
un capteur de pression (44) du fluide réfrigérant à basse pression, ledit capteur de pression (44) étant disposé en aval de la conduite de contournement (30), entre ladite conduite de contournement (30) et le compresseur (3),
une unité centrale de contrôle (40) connectée audit capteur de pression (44) du fluide réfrigérant à basse pression et audit compresseur (3), ladite unité centrale de contrôle (40) étant également connectée au premier (7) et au deuxième (11) dispositif de détente de sorte qu'ils puissent être traversés par le fluide réfrigérant sans perte de pression ou contournés,
ledit procédé comprenant un mode de dégivrage dans lequel, lorsque du givre est détecté au niveau du deuxième échangeur de chaleur (13) :
la deuxième boucle de fluide caloporteur (B) est mise à l'arrêt,
le flux d'air intérieur (100) et le flux d'air extérieur (200) sont stoppés,
le fluide réfrigérant de la première boucle de fluide réfrigérant (A) passe successivement dans le compresseur (3) où ledit fluide réfrigérant est comprimé,
l'échangeur de chaleur bifluide (5), le premier dispositif de détente (7) que ledit fluide réfrigérant traverse sans perte de pression, le premier échangeur de chaleur (9), le deuxième dispositif de détente (7) que ledit fluide réfrigérant traverse sans perte de pression et le deuxième échangeur de chaleur (13) avant de retourner au compresseur (3),
lorsque la pression du fluide réfrigérant mesurée par le capteur de pression (44) du fluide réfrigérant à basse pression est telle que ledit fluide réfrigérant soit à l'état diphasique avec une température de saturation supérieure à 0°C :
la deuxième boucle de fluide caloporteur (B) est remise en route de sorte que le fluide caloporteur circule dans l'échangeur bifluide (5) et le quatrième échangeur de chaleur (64),
le compresseur (3) est arrêté,
un flux d'air extérieur (200) est généré.

2. Procédé de fonctionnementselon la revendication précédente, **caractérisé en ce que** le circuit inversible indirect (1) comporte un capteur de pression (41) du fluide réfrigérant à haute pression, ledit capteur (41) étant disposé en aval de l'échangeur de chaleur bifluide (5), entre ledit échangeur de chaleur bifluide (5) et la vanne électronique d'expansion (7), l' unité centrale de contrôle (40) étant connectée audit capteur de température du fluide réfrigérant (41) à haute pression.

3. Procédé de fonctionnement selon l'une des revendications précédentes, **caractérisé en ce que** le circuit inversible indirect (1) comporte un capteur de pression (43) du fluide réfrigérant à pression intermédiaire, ledit capteur de pression (43) étant disposé en aval de la vanne électronique d'expansion (7), entre ladite vanne électronique d'expansion (7) et le deuxième dispositif de détente (11), l' unité centrale de contrôle (40) étant connectée audit capteur de pression (43) du fluide réfrigérant à pression intermédiaire.

4. Procédé de fonctionnement selon l'une des revendications précédentes, **caractérisé en ce que** le circuit de climatisation inversible indirect (1) comporte au niveau de la face avant du véhicule automobile, un dispositif d'obturation (93) de face avant mobile entre une position d'obturation et une position ouverte, l' unité centrale de contrôle (40) étant connectée audit dispositif d'obturation (93) de face avant.

5. Procédé de fonctionnement selon l'une des revendications précédentes, **caractérisé en ce que** le circuit de climatisation inversible indirect (1) comporte un ventilateur de face avant (91) disposé en face avant du véhicule automobile afin de produire le flux d'air extérieur (200) l' unité centrale de contrôle (40) étant connectée audit ventilateur de face avant (91).

6. Procédé de fonctionnement selon l'une quelconque des revendications précédentes, **caractérisé en ce que** le circuit de climatisation inversible indirect (1) comporte un capteur de pression (41) du fluide réfrigérant à haute pression et que la remise en route de la deuxième boucle de fluide caloporteur (B), l'arrêt du compresseur (3) et la génération du flux d'air extérieur (200) sont réalisés également si la pression du fluide réfrigérant mesurée au niveau du capteur de pression (41) du fluide réfrigérant à haute pression est supérieure ou égale à 20 bars.

7. Procédé de fonctionnement selon l'une des revendications précédentes, **caractérisé en ce que** le circuit de climatisation inversible indirect (1) comporte un capteur de pression (43) du fluide réfrigérant à pression intermédiaire et que la remise en route de la deuxième boucle de fluide caloporteur (B), l'arrêt du compresseur (3) et la génération du flux d'air extérieur (200) sont réalisés également si la pression du fluide réfrigérant mesurée au niveau du capteur de pression (43) du fluide réfrigérant à pression intermédiaire est supérieure ou égale à 10 bars.

8. Procédé de fonctionnement selon l'une des revendications précédentes, **caractérisé en ce que** le circuit de climatisation inversible indirect (1) comporte un dispositif d'obturation (93) de face avant et que afin de générer du flux d'air extérieur (200), ledit dispositif d'obturation (93) de face avant est en position ouverte.

9. Procédé de fonctionnement selon l'une des revendications précédentes, **caractérisé en ce que** le circuit de climatisation inversible indirect (1) comporte un ventilateur de face avant (91) et que lors de la génération du flux d'air extérieur (200), ledit ventilateur de face avant (91) est mis en route à vitesse maximale pendant une durée comprise entre 10 et 60s.

## Patentansprüche

1. Verfahren zum Betreiben eines indirekten umkehrbaren Klimakreislaufs (1) für ein Kraftfahrzeug, wobei der indirekte umkehrbare Klimakreislauf (1) Folgendes umfasst:
eine erste Kältemittelschleife (A), in der ein Kältemittel zirkuliert, wobei die erste Kältemittelschleife (A) in der Zirkulationsrichtung des Kältemittels Folgendes umfasst:
einen Verdichter (3),
einen Bifluid-Wärmetauscher (5)
eine erste Entspannungsvorrichtung (7),
einen ersten Wärmetauscher (9), der dazu bestimmt ist, von einem Kraftfahrzeuginnenluftstrom (100) durchströmt zu werden,
eine zweite Entspannungsvorrichtung (11),
einen zweiten Wärmetauscher (13), der dazu bestimmt ist, von einem Kraftfahrzeugaußenluftstrom (200) durchströmt zu werden, und
eine Umgehungsleitung (30) des zweiten Wärmetauschers (13),
eine zweite Wärmeübertragungsmittelschleife (B), in der ein Wärmeübertragungsmittel zirkuliert,
eine zweite Zirkulationsleitung (60) für Wärmeübertragungsmittel, die einen vierten Wärmetauscher (64) umfasst, der dazu bestimmt ist, vom Außenluftstrom (200) durchströmt zu werden, wobei der vierte Wärmetauscher (64) in der Zirkulationsrichtung des Außenluftstroms (200) vor dem zweiten Wärmetauscher (13) angeordnet ist,
wobei der Bifluid-Wärmetauscher (5) sowohl in der ersten Kältemittelschleife (A) hinter dem Verdichter (3) zwischen dem Verdichter (3) und der ersten Entspannungsvorrichtung (7) und in der zweiten Wärmeübertragungsmittelschleife (B) angeordnet ist, um den Wärmeaustausch zwischen der ersten Kältemittelschleife (A) der zweiten Wärmeübertragungsmittelschleife (B) zu ermöglichen,
wobei der indirekte umkehrbare Klimakreislauf (1) ferner Folgendes umfasst:
einen Drucksensor (44) für das Niederdruckkältemittel, wobei der Drucksensor (44) hinter der Umgehungsleitung (30) zwischen der Umgehungsleitung (30) und dem Verdichter (3) angeordnet ist,
eine zentrale Steuereinheit (40), die mit dem Drucksensor (44) für das Niederdruckkältemittel und mit dem Verdichter (3) verbunden ist, wobei die zentrale Steuereinheit (40) außerdem mit der ersten (7) und mit der zweiten Entspannungsvorrichtung (11) verbunden ist, so dass diese vom Kältemittel ohne Druckverlust durchströmt oder umgangen werden können,
wobei das Verfahren einen Enteisungsmodus umfasst, in dem, wenn Eis am zweiten Wärmetauscher (13) festgestellt wird:
die zweite Wärmeübertragungsmittelschleife (B) abgeschaltet wird,
der Innenluftstrom (100) und der Außenluftstrom (200) gestoppt werden,
das Kältemittel der ersten Kältemittelschleife (A) nacheinander den Verdichter (3), in dem das Kältemittel verdichtet wird, den Bifluid-Wärmetauscher (5), die erste Entspannungsvorrichtung (7), die das Kältemittel ohne Druckverlust durchströmt, den ersten Wärmetauscher (9), die zweite Entspannungsvorrichtung (7), die das Kältemittel ohne Druckverlust durchströmt, und den zweiten Wärmetauscher (13) passiert, bevor es zum Verdichter (3) zurückkehrt,
wobei, wenn der vom Drucksensor (44) für das Niederdruckkältemittel gemessene Druck so ist, dass sich das Kältemittel in einem zweiphasigen Zustand mit einer Sättigungstemperatur von mehr als 0 °C befindet:
die zweite Wärmeübertragungsmittelschleife (B) wieder eingeschaltet wird, so dass das Wärmeübertragungsmittel im Bifluid-Wärmetauscher (5) und im vierten Wärmetauscher (64) zirkuliert,
der Verdichter (3) abgeschaltet wird,
ein Außenluftstrom (200) erzeugt wird.

2. Betriebsverfahren nach dem vorangehenden Anspruch, **dadurch gekennzeichnet, dass** der indirekte umkehrbare Kreislauf (1) einen Drucksensor (41) für das Hochdruckkältemittel umfasst, wobei der Sensor (41) hinter dem Bifluid-Wärmetauscher (5) zwischen dem Bifluid-Wärmetauscher (5) und dem elektronischen Expansionsventil (7) angeordnet ist, wobei die zentrale Steuereinheit (40) mit dem Temperatursensor (41) für das Hochdruckkältemittel verbunden ist.

3. Betriebsverfahren nach einem der vorangehenden Ansprüche, **dadurch gekennzeichnet, dass** der indirekte umkehrbare Kreislauf (1) einen Drucksensor (43) für das Mitteldruckkältemittel umfasst, wobei der Drucksensor (43) hinter dem elektronischen Expansionsventil (7) zwischen dem elektronischen Expansionsventil (7) und der zweiten Entspannungsvorrichtung (11) angeordnet ist, wobei die zentrale Steuereinheit (40) mit dem Drucksensor (43) für das Mitteldruckkältemittel verbunden ist.

4. Betriebsverfahren nach einem der vorangehenden Ansprüche, **dadurch gekennzeichnet, dass** der indirekte umkehrbare Klimakreislauf (1) im Bereich der Kraftfahrzeugvorderseite eine Vorderseitenabsperrvorrichtung (93) umfasst, die zwischen einer Absperrposition und einer offenen Position bewegbar ist, wobei die zentrale Steuereinheit (40) mit der Vorderseitenabsperrvorrichtung (93) verbunden ist.

5. Betriebsverfahren nach einem der vorangehenden Ansprüche, **dadurch gekennzeichnet, dass** der indirekte umkehrbare Klimakreislauf (1) einen an der Kraftfahrzeugvorderseite angeordneten Vorderseitenlüfter (91) zum Erzeugen des Außenluftstroms (200) umfasst, wobei die zentrale Steuereinheit (40) mit dem Vorderseitenlüfter (91) verbunden ist.

6. Betriebsverfahren nach einem der vorangehenden Ansprüche, **dadurch gekennzeichnet, dass** der indirekte umkehrbare Klimakreislauf (1) einen Drucksensor (41) für das Hochdruckkältemittel umfasst und dass die Wiederinbetriebnahme der zweiten Wärmeübertragungsmittelschleife (B), die Abschaltung des Verdichters (3) und die Erzeugung des Außenluftstroms (200) auch dann erfolgen, wenn der am Drucksensor (41) für das Hochdruckkältemittel gemessene Kältemitteldruck 20 bar oder mehr beträgt.

7. Betriebsverfahren nach einem der vorangehenden Ansprüche, **dadurch gekennzeichnet, dass** der indirekte umkehrbare Klimakreislauf (1) einen Drucksensor (43) für das Mitteldruckkältemittel umfasst und dass die Wiederinbetriebnahme der zweiten Wärmeübertragungsmittelschleife (B), die Abschaltung des Verdichters (3) und die Erzeugung des Außenluftstroms (200) auch dann erfolgen, wenn der am Drucksensor (43) des Mitteldruckkältemittels gemessene Kältemitteldruck 10 bar oder mehr beträgt.

8. Betriebsverfahren nach einem der vorangehenden Ansprüche, **dadurch gekennzeichnet, dass** der indirekte umkehrbare Klimakreislauf (1) eine Vorderseitenabsperrvorrichtung (93) umfasst und dass sich die Vorderseitenabsperrvorrichtung (93) zur Erzeugung des Außenluftstroms (200) in der offenen Position befindet.

9. Betriebsverfahren nach einem der vorangehenden Ansprüche, **dadurch gekennzeichnet, dass** der indirekte umkehrbare Klimakreislauf (1) einen Vorderseitenlüfter (91) umfasst und dass bei der Erzeugung des Außenluftstroms (200) der Vorderseitenlüfter (91) für eine Zeitdauer zwischen 10 und 60 s mit maximaler Drehzahl eingeschaltet ist.

## Claims

1. Method for operating an indirect reversible air-conditioning circuit (1) for a motor vehicle, said indirect reversible air-conditioning circuit (1) comprising:
a first, refrigerant loop (A) in which a refrigerant circulates, said first, refrigerant loop (A) comprising, in the direction of circulation of the refrigerant:
a compressor (3),
a bifluid heat exchanger (5),
a first expansion device (7),
a first heat exchanger (9) being intended to be passed through by an air flow (100) inside the motor vehicle,
a second expansion device (11),
a second heat exchanger (13) being intended to be passed through by an air flow (200) outside the motor vehicle, and
a bypass duct (30) of the second heat exchanger (13),
a second, heat-transfer fluid loop (B) in which a heat-transfer fluid circulates, a second heat-transfer fluid circulation duct (60) comprising a fourth heat exchanger (64) intended to be passed through by the outside air flow (200), said fourth heat exchanger (64) being arranged upstream of the second heat exchanger (13) in the direction of circulation of the outside air flow (200),
the bifluid heat exchanger (5) being arranged jointly on the first, refrigerant loop (A) downstream of the compressor (3), between said compressor (3) and the first expansion device (7),
and on the second, heat-transfer fluid loop (B), so as to allow the heat exchanges between the first,
refrigerant loop (A) and the second, heat-transfer fluid loop (B),
the indirect reversible air-conditioning circuit (1) further comprising:
a pressure sensor (44) for the refrigerant at low pressure, said pressure sensor (44) being arranged downstream of the bypass duct (30), between said bypass duct (30) and the compressor (3),
a central control unit (40) connected to said pressure sensor (44) for the refrigerant at low pressure and to said compressor (3), said central control unit (40) being also connected to the first expansion device (7) and to the second expansion device (11) such that they can be passed through by the refrigerant without loss of pressure or bypassed,
said method comprising a defrosting mode in which, when frost is detected on the second heat exchanger (13) :
the second, heat-transfer fluid loop (B) is stopped,
the inside air flow (100) and the outside air flow (200) are stopped,
the refrigerant of the first, refrigerant loop (A) passes successively into the compressor (3) where said refrigerant is compressed, the bifluid heat exchanger (5), the first expansion device (7) that said refrigerant passes through without loss of pressure, the first heat exchanger (9), the second expansion device (7) that said refrigerant passes through without loss of pressure and the second heat exchanger (13) before returning to the compressor (3),
when the pressure of the refrigerant measured by the pressure sensor (44) for the refrigerant at low pressure is such that said refrigerant is in the diphasic state with a saturation temperature above 0°C:
the second, heat-transfer fluid loop (B) is started up again such that the heat-transfer fluid circulates in the bifluid exchanger (5) and the fourth heat exchanger (64),
the compressor (3) is stopped,
an outside air flow (200) is generated.

2. Operating method according to the preceding claim, **characterized in that** the indirect reversible circuit (1) comprises a pressure sensor (41) for the refrigerant at high pressure, said sensor (41) being arranged downstream of the bifluid heat exchanger (5), between said bifluid heat exchanger (5) and the electronic expansion valve (7), the central control unit (40) being connected to said temperature sensor (41) for the refrigerant at high pressure.

3. Operating method according to one of the preceding claims, **characterized in that** the indirect reversible circuit (1) comprises a pressure sensor (43) for the refrigerant at intermediate pressure, said pressure sensor (43) being arranged downstream of the electronic expansion valve (7), between said electronic expansion valve (7) and the second expansion device (11), the central control unit (40) being connected to said pressure sensor (43) for the refrigerant at intermediate pressure.

4. Operating method according to one of the preceding claims, **characterized in that** the indirect reversible air-conditioning circuit (1) comprises, at the front face of the motor vehicle, a front face blocking device (93) that can move between a blocking position and an open position, the central control unit (40) being connected to said front face blocking device (93).

5. Operating method according to one of the preceding claims, **characterized in that** the indirect reversible air-conditioning circuit (1) comprises a front face fan (91) arranged at the front face of the motor vehicle in order to produce the outside air flow (200), the central control unit (40) being connected to said front face fan (91).

6. Operating method according to any one of the preceding claims, **characterized in that** the indirect reversible air-conditioning circuit (1) comprises a pressure sensor (41) for the refrigerant at high pressure and that the restarting of the second, heat-transfer fluid loop (B), the stopping of the compressor (3) and the generation of the outside air flow (200) are performed also if the pressure of the refrigerant measured at the pressure sensor (41) for the refrigerant at high pressure is greater than or equal to 20 bar.

7. Operating method according to one of the preceding claims, **characterized in that** the indirect reversible air-conditioning circuit (1) comprises a pressure sensor (43) for the refrigerant at intermediate pressure and that the restarting of the second, heat-transfer fluid loop (B), the stopping of the compressor (3) and the generation of the outside air stream (200) are performed also if the pressure of the refrigerant measured at the pressure sensor (43) for the refrigerant at intermediate pressure is greater than or equal to 10 bar.

8. Operating method according to one of the preceding claims, **characterized in that** the indirect reversible air-conditioning circuit (1) comprises a front face blocking device (93) and that, in order to generate the outside air flow (200), said front face blocking device (93) is in open position.

9. Operating method according to one of the preceding claims, **characterized in that** the indirect reversible air-conditioning circuit (1) comprises a front face fan (91) and that, upon the generation of the outside air flow (200), said front face fan (91) is started up at maximum speed for a time of between 10 and 60 s.
